# FASCICULE DE BREVET EUROPEEN

(11) **EP 0 506 521 B1**
(45) Date de publication et mention de la délivrance du brevet: **23.08.1995**
(21) Numéro de dépôt: 92400732.1
(22) Date de dépôt: 19.03.1992
(51) Int. Cl.: H05B 3/86

(54) **Vitrage feuilleté chauffant**
Heizbare Verbundglasscheibe
Laminated heating window

(30) Priorité: 27.03.1991 FR 9103658
(43) Date de publication de la demande: 30.09.1992
(73) Titulaire: SAINT-GOBAIN VITRAGE, 92400 Courbevoie (FR)
(72) Inventeur: Challet, Patrice, F-78380 Bougival (FR); Bedue, Eric, F-91170 Viry-Chatillon (FR)
(74) Mandataire: Muller, René

(56) Documents cités:
- EP-A- 0 188 160
- EP-A- 0 353 142
- FR-A- 1 398 776
- FR-A- 1 410 181
- US-A- 3 299 253
- US-A- 3 895 433
- US-A- 4 361 751

## Description

La présente invention concerne un vitrage chauffant feuilleté comprenant au moins un réseau chauffant de fils fins métalliques de résistance électrique incrustés dans une couche thermoplastique intercalaire, généralement en polyvinylbutyral (plastifié) ou en polyuréthane et s'étendant entre deux bandes collectrices.

Il est connu d'utiliser des vitrages chauffants du type décrit ci-dessus pour équiper des véhicules de transport aérien, maritime ou terrestre. Ces vitrages sont notamment utilisés comme pare-brise d'avions, de bateaux, d'automobiles, de trains par exemple. Ils comprennent un réseau formé de fils fins de résistance, métalliques, posés en parallèle entre deux bandes collectrices reliées à une source de tension électrique extérieure au vitrage. Ces conducteurs sont le plus souvent ondulés le long de directrices rectilignes de façon à mieux répartir la chaleur, à augmenter la longueur de fil de résistance entre les bandes collectrices et à réduire les phénomènes de perturbations optiques.

Un des problèmes rencontrés dans la fabrication de ce type de vitrage chauffant est la liaison entre les fils fins de résistance et les bandes collectrices. Pour assurer cette liaison, on est généralement obligé de placer les extrémités de fils de résistance en sandwich entre deux bandes collectrices formées de clinquants, c'est-à-dire de bandes métalliques larges et de faible épaisseur, inférieure à l'épaisseur de l'intercalaire.

Un autre problème rencontré lors de l'utilisation de clinquants est leur manque de souplesse. On ne peut leur donner des courbures de faibles rayons, particulièrement utiles lorsqu'on désire une structure de réseau chauffant utilisant des bandes collectrices s'étendant sur au moins une partie de deux bords consécutifs du vitrage, et on est obligé de replier les clinquants sur eux-mêmes et de créer par là une surépaisseur importante et localisée pouvant entrainer des casses du vitrage.

Un autre problème rencontré lors de la fabrication des vitrages chauffants utilisant des clinquants, et toujours lié à leur manque de souplesse, est la sortie du clinquant hors du vitrage, qui est nécessaire à la connexion avec la source d'énergie électrique. On est généralement obligé de souder, en bordure, à l'intérieur du vitrage un raccord plus souple, ce qui nécessite une opération supplémentaire et donc un coût plus élevé.

On connait du document US-A-4 361 751, ayant servi à délimiter le préambule de la présente revendication 1, un vitrage chauffant équipé de bandes collectrices consistant en une mèche formée de fils sous forme de torons disposés en maille. Cette structure en maille procure une souplesse à la mèche mais elle ne permet pas le passage d'une grande puissance électrique.

Dans un domaine technique différent de celui des vitrages pour véhicules de transport, le document US-A-3 299 253 décrit l'utilisation d'une tresse pour connecter une bande collectrice à un dispositif de régulation de chauffage. Aucune information n'est fournie quant à la structure de la tresse.

L'invention obvie aux inconvénients cités. Elle propose un vitrage feuilleté chauffant, comprenant une couche intercalaire portant au moins un réseau de fils fins métalliques de résistance électrique s'étendant entre deux bandes collectrices, au moins une de ces bandes collectrices étant formée entièrement d'une tresse conductrice plate constituée d'un nombre de torons compris entre 10 et 50, chacun d'eux comprenant plusieurs fils métalliques, un clinquant étant associée à la tresse dans sa partie rectiligne recevant les fils de résistance de façon à prendre les fils de résistance en sandwich.

L'utilisation de tresses métalliques du type décrit autorise des sorties directes des bandes collectrices. Outre les soudures évitées, la grande flexibilité ou souplesse des tresses permet la réalisation, le cas échéant, de bandes collectrices présentant de faibles rayons de courbure.

Un autre avantage de l'utilisation d'au moins une tresse métallique associée à un clinquant est l'obtention d'un bon contact électrique entre ladite tresse et les fils fins de résistance.

Dans une forme préférée du vitrage selon l'invention, la bande collectrice en forme de tresse est étamée. La couche d'étain permet d'améliorer encore le contact électrique entre la bande collectrice et les fils métalliques de résistance électrique. Ceux-ci se trouvent en fait collés ou soudés sur la bande collectrice après l'opération de dépôt à chaud des fils sur l'intercalaire et/ou après, le cycle thermique utilisé au cours de la fabrication du vitrage feuilleté.

Un autre avantage apporté par l'invention dans l'utilisation de tresses est que l'on peut augmenter la section des bandes collectrices tout en conservant une souplesse suffisante. Par cette section plus importante, il est ainsi possible de faire passer une puissance électrique plus forte. On peut encore ainsi éviter une déperdition électrique importante comme ce peut être le cas lors de l'utilisation de clinquants.

Selon une réalisation avantageuse du vitrage selon l'invention, le réseau est formé de fils de résistance orientés selon la direction verticale, les parties des bandes collectrices recevant les fils de résistance étant sensiblement horizontales. On peut ainsi réaliser des réseaux chauffants avec des fils très rapprochés sans que ceux-ci ne gènent la vision à travers le vitrage, même lorsque celui-ci est très incliné comme c'est le cas actuellement pour les véhicules de transport modernes.

Dans cette structure, au moins la bande collectrice en forme de tresse selon l'invention présente alors généralement au moins une courbure de faible rayon.

Afin d'augmenter les performances électriques de chauffage du vitrage, selon une réalisation avantageuse, le vitrage est équipé de deux réseaux chauffants, chacun d'eux comprenant au moins une bande collectrice formée d'une tresse métallique, et chacun d'eux couvrant une demi-zone de la zone à chauffer.

La tresse utilisée en tant que bande collectrice selon l'invention présente une forme très aplatie, c'est-à-dire que sa largeur est bien plus importante que son épaisseur. Le rapport entre ces deux dimensions largeur/épaisseur est compris généralement entre 10 et 50. La largeur de la tresse peut être comprise entre 3 et 10 mm environ. Pour obtenir le rapport entre la largeur et l'épaisseur, la tresse peut être laminée.

La tresse conductrice utilisée selon l'invention est formée d'un nombre de torons compris entre 10 et 50 et de préférence entre 20 et 40, chacun d'eux comprenant avantageusement une dizaine de fils. Les fils métalliques en cuivre par exemple présentent un diamètre compris généralement entre 0,05 et 0,10 millimètre. La tresse peut être fabriquée sur un métier à tresser circulaire.

La grande souplesse de la tresse permet la réalisation de faibles rayons de courbure, par exemple de rayons pouvant aller jusqu'à une limite inférieure que l'on peut situer entre 5 et 10 mm environ, sans surépaisseur due à un pliage quelconque de la tresse. Lorsqu'on désire toutefois réaliser des bandes collectrices avec des rayons de courbure encore plus faibles, il est possible de plier la tresse sur elle-même et de l'aplatir par martelage par exemple, la surépaisseur résultant du pli n'étant que de l'ordre de 20 à 30 % de l'épaisseur de la tresse non pliée, alors qu'avec un clinquant la surépaisseur est de 100 %.

En sortie du vitrage, la tresse peut être gainée, par exemple à l'aide d'une ou plusieurs couches d'une matière thermorétractable. Juste au niveau de la sortie, la gaine peut présenter une structure plus aplatie pour pouvoir le cas échéant pénétrer à l'intérieur du vitrage sur une distance de quelques millimètres.

L'extrémité en sortie de la tresse peut être munie d'une cosse permettant la connection avec un des deux pôles de la source de tension.

Les deux bandes collectrices d'un réseau chauffant peuvent être formées de tresses. Dans une variante seule une des deux bandes collectrices est constituée d'une tresse. C'est alors bien entendu, la bande collectrice qui nécessite le plus de souplesse. L'autre bande collectrice est constituée d'un clinquant métallique par exemple en cuivre étamé ou de deux clinquants superposés. Un clinquant convenable présente par exemple une épaisseur d'environ 0,03 à 0,2 mm et une largeur d'environ 0,4 à 1 cm.

Afin d'assurer un bon contact électrique entre les fils de résistance et la tresse, on associe à celle-ci, dans ses parties rectilignes, un clinquant de façon à prendre les fils de résistance en sandwich.

L'invention concerne aussi la tresse conductrice plane utilisée en tant que bande collectrice dans le vitrage feuilleté chauffant décrit ci-dessus, ainsi que la tresse munie de sa gaine thermorétractable.

D'autres avantages et caractéristiques de l'invention apparaitront dans la description suivante d'exemples de vitrages chauffants selon l'invention.

La figure 1 représente un vitrage chauffant selon l'invention. La figure 1 A est une vue partielle en section du vitrage.

La figure 2 représente une variante équipée de deux réseaux chauffants.

La figure 3 représente un détail de la figure 2.

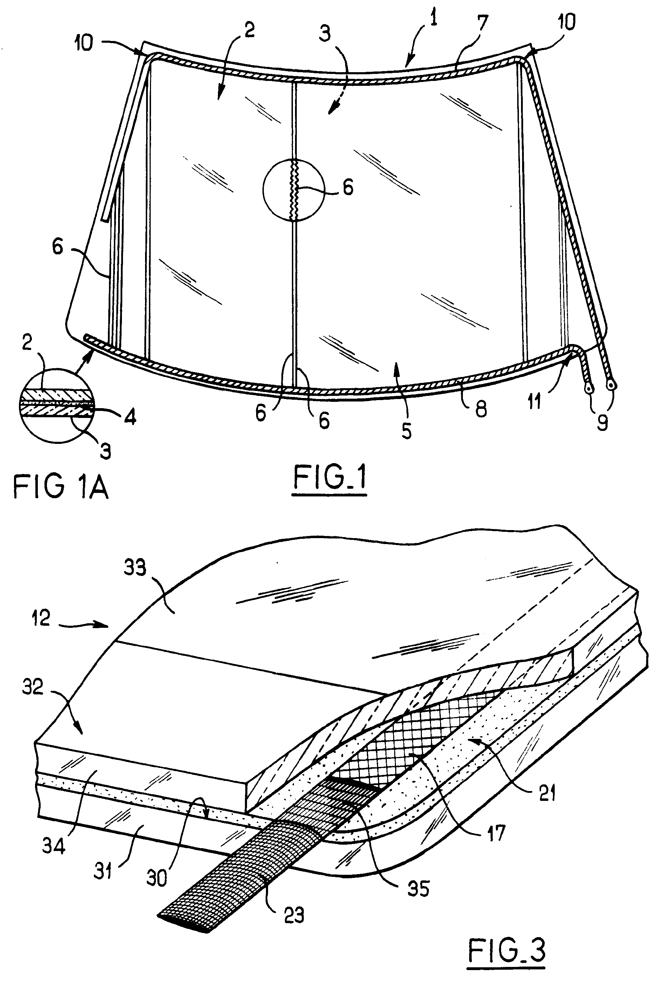

Les figures 1 et 1 A représentent un vitrage feuilleté chauffant 1, formé de deux feuilles de verre 2, 3, d'un intercalaire 4 en une matière thermoplastique par exemple en polyvinylbutyral de 0,76 mm d'épaisseur, porteur d'un réseau chauffant 5 formé de fils fins 6 de résistance électrique, en tungstène, d'un diamètre de 20 »m environ, s'étendant de façon ondulée autour de directrices verticales entre deux bandes collectrices 7, 8, les deux bandes collectrices étant constituées de tresses métalliques laminées formées de 30 torons de 10 fils de cuivre chacun. Les deux tresses sortent du vitrage sans qu'il soit prévu d'autres éléments de raccord. Les extrémités des deux tresses sont munies de cosses 9 permettant leur connection à une source de courant.

Les bandes collectrices 7 et 8 présentent des courbures 10, 11, de faible rayon, par exemple de 10 mm de rayon, sans surépaisseur et elles sont noyées dans l'intercalaire 4 comme le reste du réseau chauffant.

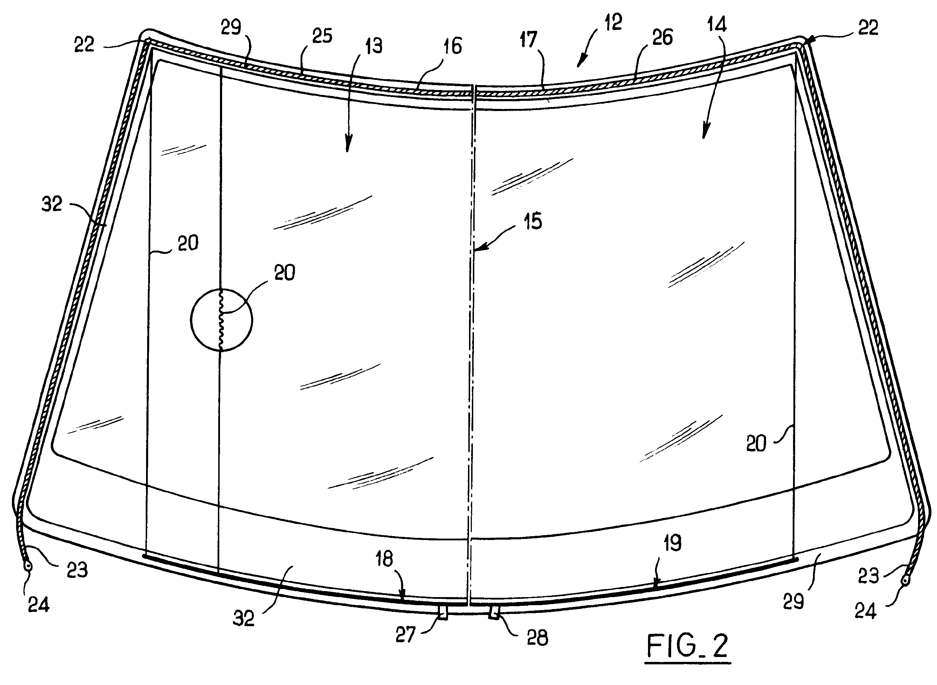

La figure 2 représente un vitrage feuilleté chauffant 12 selon l'invention, équipé ici de deux réseaux chauffants 13, 14 recouvrant chacun la moitié de la surface à chauffer. Ce vitrage chauffant peut être utilisé en tant que pare-brise de véhicule à moteur. Les deux réseaux, de structure symétrique par rapport à l'axe 15 du vitrage, sont munis chacun d'une bande collectrice supérieure 16, 17 constituée d'une tresse métallique étamée comprenant 32 torons de 10 fils chacun, et d'une bande collectrice inférieure 18, 19 constituée chacune de deux clinquants superposés prenant en sandwich les fils de résistance 20 s'étendant à nouveau ici selon une direction verticale (parallèle à l'axe du vitrage) entre les bandes collectrices. Les deux réseaux sont déposés sur l'intercalaire 21 en polyvinylbutyral.

Les fils de résistance 20 en tungstène, d'un diamètre de 20 »m environ sont ondulés autour de leur direction verticale. L'écartement entre fils est compris entre 1,5 et 3 mm environ.

Comme représenté sur la figure 2, les deux bandes collectrices supérieures 16, 17 présentent dans les coins supérieurs latéraux des réseaux chauffants, des courbures 22 de très faible rayon, obtenues ici par pliage partiellement sur elles-mêmes des tresses, la surépaisseur résultante étant d'environ 20 à 30 % seulement de l'épaisseur de la tresse non pliée.

Les bandes collectrices supérieures sortent directement du vitrage. Au niveau de la sortie, elles sont gainées à l'aide d'une matière thermorétractable 23. Elles se terminent par une cosse plate 24 destinée à la connexion avec la source de tension.

Afin de mieux assurer le contact électrique entre les bandes collectrices supérieures et les fils de résistance, les parties sensiblement rectilignes de ces bandes sur lesquelles arrivent les fils de résistance sont couvertes de clinquants 25, 26 qui prennent ainsi avec les tresses métalliques auxquelles ils sont associés les fils en sandwich.

Les deux sorties à partir des bandes collectrices inférieures 18, 19 sont constituées de plaques métalliques 27, 28 soudées à ces bandes.

Les bandes collectrices peuvent avantageusement être masquées à la vue de l'extérieur du vitrage, par exemple en prévoyant sur le vitrage un contour opaque 29, noir ou coloré. Ce contour peut être déposé sur la face intérieure 30 de la feuille de verre extérieure 31 du vitrage. Il peut être formé d'une couche d'un primaire noir, par exemple un primaire du type de ceux connus et utilisés pour le traitement des vitrages avant le dépôt du cordon de collage couramment employé pour le montage des vitrages dans les baies de carrosseries.

Le vitrage représenté sur la figure 2 présente encore une bande périphérique émaillée 32, sur la face 33 destinée à être orientée vers l'habitacle du véhicule de la feuille de verre intérieure 34.

Sur la figure 3, on a représenté, en vue partiellement découpée, un détail du vitrage 12 et en particulier la sortie d'une tresse 17. La tresse 17 est incrustée dans l'intercalaire en polyvinylbutyral 21 entre les deux feuilles de verre 31, 34 dont une partie a été découpée sur la figure pour mieux visualiser la tresse. La gaine 23 dont est munie la tresse à l'extérieur du vitrage présente une extrémité 35 plus aplatie (ou constituée d'un manchon de plus faible section) au niveau de la sortie, ce qui permet, éventuellement, de la faire pénétrer sur une faible distance dans l'intercalaire, assurant ainsi une meilleure isolation électrique de la tresse, ainsi qu'une meilleure résistance mécanique au cisaillement.

## Revendications

1. Vitrage feuilleté chauffant (1, 12), notamment pour véhicule de transport, comprenant une couche intercalaire (4, 21) portant au moins un réseau chauffant (5, 13, 14) de fils fins métalliques (6, 20) de résistance électrique s'étendant entre deux bandes collectrices (7, 8; 16, 17, 18, 19), au moins une (7, 8 ; 16, 17) desdites bandes collectrices (7, 8 ; 16, 17, 18, 19) étant formée entièrement d'une tresse conductrice plate constituée de plusieurs torons caractérisé en ce que la tresse est constituée d'un nombre de torons compris entre 10 et 50, chacun d'eux comprenant plusieurs fils métalliques et que dans sa partie rectiligne recevant les fils de résistance, un clinquant (25, 26) lui est associé de façon à prendre les fils de résistance en sandwich.

2. Vitrage feuilleté chauffant selon la revendication 1, caractérisé en ce que chaque toron comprend une dizaine de fils métalliques.

3. Vitrage feuilleté chauffant selon une des revendications 1 ou 2, caractérisé en ce que la tresse conductrice est une tresse étamée, dont les fils métalliques sont en cuivre.

4. Vitrage feuilleté chauffant selon une des revendications 1 à 3, caractérisé en ce que la partie des bandes collectrices (7, 8 ; 16, 17, 18, 19) recevant les fils de résistance électrique (6 ; 20) est disposée de façon sensiblement horizontale, les fils de résistance s'étendant entre les bandes collectrices et étant orientés selon une direction verticale.

5. Vitrage feuilleté chauffant selon une des revendications 1 à 4, caractérisé en ce qu'il comprend deux réseaux chauffants (13, 14), chacun d'eux comprenant au moins une bande collectrice (16, 17) formée d'une tresse conductrice, chacun d'eux couvrant une demi-zone de la zone à chauffer.

6. Vitrage feuilleté chauffant selon une des revendications 1 à 5, caractérisé en ce que le rapport entre la largeur et l'épaisseur de la tresse conductrice est comprise entre 10 et 50.

7. Vitrage feuilleté chauffant selon une des revendications 1 à 6, caractérisé en ce que la partie de la tresse émergeant du vitrage est pourvue d'une gaine thermorétractable (23).

8. Vitrage feuilleté chauffant selon la revendication 7, caractérisé en ce que l'extrémité (35) de la gaine thermorétractable (23) à la sortie du vitrage est amincie.

## Patentansprüche

1. Beheizbare Verbundglasscheibe (1, 12), insbesondere für Beförderungsfahrzeuge, umfassend eine Zwischenschicht (4, 21), die wenigstens ein Beheizungsnetz (5, 13, 14) aus feinen Heizwiderstandsmetalldrähten (6, 20) trägt, die sich zwischen zwei Sammelbändern (7, 8; 16, 17, 18, 19) erstrekken, wobei wenigstens eines (7, 8; 16, 17) dieser Sammelbänder (7, 8; 16, 17, 18, 19) vollständig aus einem flachen leitfähigen geflochtenen Band gebildet ist, das aus mehreren Litzen besteht, **dadurch gekennzeichnet, daß** das geflochtene Band aus einer Anzahl von 10 bis 50 Litzen besteht, wobei jede davon mehrere Metalldrähte enthält, **und daß** es in seinem geraden Teil, der die Heizwiderstandsdrähte aufnimmt, mit einer Metallfolie (25, 26) derart verbunden ist, **daß** die Heizwiderstandsdrähte sandwichartig aufgenommen werden.

2. Beheizbare Verbundglasscheibe nach Anspruch 1, **dadurch gekennzeichnet, daß** jede Litze etwa 10 Metalldrähte enthält.

3. Beheizbare Verbundglasscheibe nach Anspruch 1 oder 2, **dadurch gekennzeichnet, daß** das leitfähige geflochtene Band verzinnt ist und seine Metalldrähte aus Kupfer bestehen.

4. Beheizbare Verbundglasscheibe nach einem der Ansprüche 1 bis 3, **dadurch gekennzeichnet, daß** der Teil der Sammelbänder (7, 8; 16, 17, 18, 19), welcher die Heizwiderstandsdrähte (6; 20) aufnimmt, im wesentlichen horizontal angeordnet ist und die Heizwiderstandsdrähte, die sich zwischen den Sammelbändern erstrecken, vertikal ausgerichtet sind.

5. Beheizbare Verbundglasscheibe nach einem der Ansprüche 1 bis 4, **dadurch gekennzeichnet, daß** sie zwei Beheizungsnetze (13, 14) umfaßt, wobei jedes davon wenigstens ein aus einem leitfähigen geflochtenen Band gebildetes Sammelband (16, 17) enthält und eine Hälfte des zu beheizenden Bereichs bedeckt.

6. Beheizbare Verbundglasscheibe nach einem der Ansprüche 1 bis 5, **dadurch gekennzeichnet, daß** das Verhältnis von Breite zu Dicke des leitfähigen geflochtenen Bandes 10 bis 50 beträgt.

7. Beheizbare Verbundglasscheibe nach einem der Ansprüche 1 bis 6, **dadurch gekennzeichnet, daß** der die Glasscheibe verlassende Teil des geflochtenen Bandes mit einer wärmeschrumpfbaren Hülle (23) versehen ist.

8. Beheizbare Verbundglasscheibe nach Anspruch 7, **dadurch gekennzeichnet, daß** das Ende (35) der wärmeschrumpfbaren Hülle (23) am Ausgang aus der Glasscheibe dünner wird.

## Claims

1. Heating laminated pane (1, 12), notably for transportation vehicle, comprising an intermediate film (4, 21) carrying at least one heating network (5, 13, 14) of fine metallic electrical resistance wires (6, 20) extending between two collector strips (7, 8; 16, 17, 18, 19), at least one (7, 8; 16, 17) of said collector strips (7, 8; 16, 17, 18, 19) being formed entirely of a flat conducting braid constituted of several strands, characterized in that the braid is constituted of a number of strands lying between 10 and 50, each of them comprising several metallic wires and that, in its rectilinear part receiving the resistance wires, a foil (25, 26) is associated with it in such a manner as to sandwich the resistance wires.

2. Heating laminated pane according to Claim 1, characterized in that each strand comprises about ten metallic wires.

3. Heating laminated pane according to one of Claims 1 or 2, characterized in that the electrically conducting braid is a tinned braid, the metal wires of which are of copper.

4. Heating laminated pane according to one of Claims 1 to 3, characterized in that the portion of the collector strips (7, 8; 16, 17, 18, 19) receiving the electrical resistance wires (6; 20) is disposed substantially horizontally, the resistance wires extending between the collector strips and being orientated in a vertical direction.

5. Heating laminated pane according to one of Claims 1 to 4, characterized in that it comprises two heating networks (13, 14), each of them comprising at least one collector strip (16, 17) formed of a conducting braid, each of them covering one half-zone of the zone to be heated.

6. Heating laminated pane according to one of Claims 1 to 5, characterized in that the ratio between the width and the thickness of the conducting braid is between 10 and 50.

7. Heating laminated pane according to one of Claims 1 to 6, characterized in that the portion of the braid emerging from the pane is provided with a heat-shrinkable sheath (23).

8. Heating laminated pane according to Claim 7, characterized in that the end (35) of the heat-shrinkable sheath (23) at the outlet from the pane is thinned.
